**Europäisches Patentamt**

**European Patent Office**

**Office européen des brevets**

(19)

(11) Publication number: **0 014 894**
**B1**

(12) **EUROPEAN PATENT SPECIFICATION**

(45) Date of publication of patent specification: **25.07.84**

(51) Int. Cl.³: **G 01 N 21/89**

(21) Application number: **80100582.8**

(22) Date of filing: **05.02.80**

(54) Apparatus for monitoring for faults in translucent strip material.

(30) Priority: **06.02.79 DE 2904433**

(43) Date of publication of application:
**03.09.80 Bulletin 80/18**

(45) Publication of the grant of the patent:
**25.07.84 Bulletin 84/30**

(84) Designated Contracting States:
**FR GB NL**

(56) References cited:
**US - A - 3 786 265**
**US - A - 3 843 890**
**US - A - 4 005 926**

**"Magnetbandschleifenspeicher", Taschenbuch der Informatik - K. Steinbuch, vol. 1, 1974, Springer Ed. pages 544 and 545**

(73) Proprietor: **Erwin Sick GmbH Optik-Elektronik**
**Sebastian-Kneipp-Strasse 1**
**D-7808 Waldkirch (DE)**

(72) Inventor: **Sick, Erwin**
**Stifterweg 6**
**D-8021 Icking (DE)**
Inventor: **Ostertag, Klaus**
**Engadiner Strasse 38**
**D-8000 München 71 (DE)**

(74) Representative: **Dipl.-Phys.Dr. Manitz Dipl.-Ing. Finsterwald Dipl.-Ing. Grämkow Dipl.-Chem.Dr. Heyn Dipl.-Phys.Rotermund Morgan B.Sc.(Phys.) Robert-Koch-Strasse 1**
**D-8000 München 22 (DE)**

Courier Press, Leamington Spa, England.

## Description

The invention relates to an apparatus for monitoring for faults in translucent strip material and has particular reference to the detection of faults in photographic film. Various types of apparatus already exist for this purpose, such as the apparatus described in US—A—4 005 926. This known apparatus comprises a transport device for continuously moving the strip material in its longitudinal direction, an optical scanning device for projecting a first and second set of light beams at the strip to effect line scanning thereof in a direction transverse to its direction of movement and first and second photoelectric detectors, each associated with a light conducting rod, for receiving light from said first and second sets of light beams respectively, after impingement of the light from said first and second sets of light beams on the strip. In this arrangement the strip is forwarded in tensioned condition between two spaced apart rollers and the first set of light beams impinges on the strip substantially at right angles thereto in a region between said two rollers. The first photoelectric detector is arranged behind the strip to receive light from said first set of light beams. The strip is also fed around a further roller either before or after said two rollers and the second set of light beams is directed onto the strip at said further roller. The second photoelectric detector is provided for light reflected from the strip at said further roller. The known arrangement thus makes it possible to monitor for faults both in reflection and transmission.

A similar arrangement is described in US—A—3 843 890. However, the system of US—A—3 843 890 requires a separate light source for the reflection and transmission measurements and this is unnecessarily wasteful.

Another prior art arrangement is known in which the reflection and transmission measurements are made while the film material is passing over a glass roller or a section of a glass cylinder. An arrangement of this kind is however disadvantageous because faults which are not actually present can be simulated if the glass surface is dirty, if scratches are present on the glass surface and by the formation of air bubbles between the film and the glass surface.

The principal object underlying the present invention is to provide a simple and compact apparatus which avoids the formation of air bubbles between the strip and the roller at which reflection measurements are made and which avoids contamination or scratching of the roller surface from simulating the presence of faults in the film materials itself. The apparatus should also allow travelling waves in the longitudinal direction of the film material to be avoided.

In order to satisfy the above objects the invention envisages, in an apparatus of the kind known from US—A—4 005 926, that the further roller has an air permeable peripheral wall through which air is blown from the inside to the outside of said further roller to avoid formation of air bubbles between the strip and the further roller.

Thus a defined air cushion is formed between the surface of the further roller and the film. This is useful, apart from other reasons, in order to avoid drawing in air bubbles and disturbing the optical measurement procedure. In addition travelling waves in the longitudinal direction of the film are avoided by the presence of the air cushion.

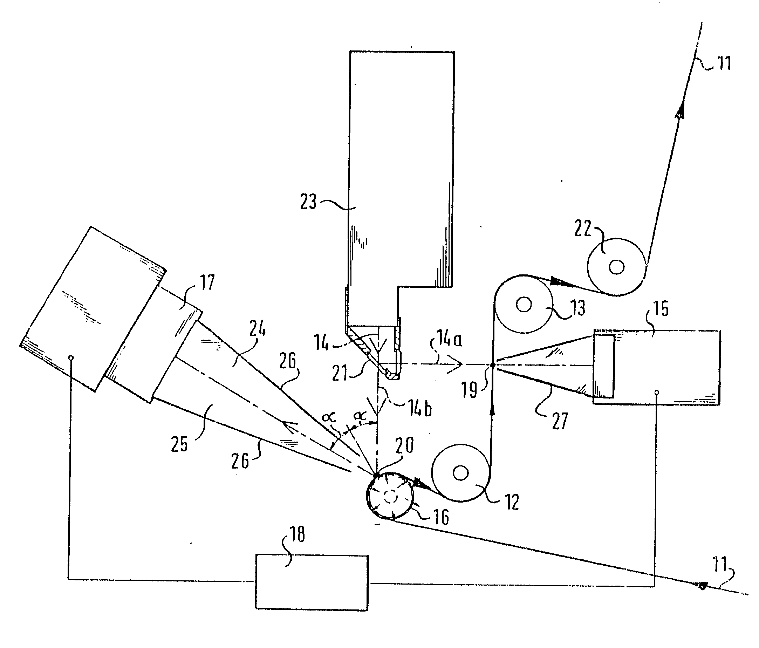

It is admittedly known in the field of magnetic tape loop memories to prevent mechanical contact between the tape loop and the two deflection rollers so as to provide air cushions between the tape loop and the deflection rollers. This arrangement is described in the Book "Taschenbuch der Informatik" K. Steinbuch, vol. 1, 1974, Springer Ed. on pages 544 and 545 under the heading 4.8.7 "Magnetbandschleifenspeicher" with particular reference to Fig. 4.8-12. However, not only are the fields of application different but also the underlying problems.

In one advantageous embodiment of the invention the optical scanning device comprises a single light source and a beam divider for transmitting the second set of light beams and for reflecting the first set of light beams. The respective distances traversed by the second set of light beams and the first set of light beams from the beam divider to the strip are substantialy equal. In this way the scanning light beads, which are projected onto the strip material at two points which are spaced apart in the longitudinal direction of the strip material, have the same form and intensity.

A particularly straightforward spatial construction is achieved if the two planes tangential to the strip at the two respective lines of incidence of the first and second sets of light beams with the strip subtend an angle one with the other, such that one line of incidence lies directly in the path of the second set of light beams transmitted by the beam divider and the other line of incidence lies directly in the path of the first set of light beams reflected by the beam divider. Thus, for generating two scanning light beads, only a simple beam divider is required in additional to a single device for generating a scanning light beam.

Further advantageous embodiments of the invention are set forth in subordinate claims 4 and 5.

The invention will now be described in further detail and by way of example only with reference to the accompanying drawing, the single figure of which shows a schematic side view of an apparatus for monitoring for faults in translucent strip material.

As seen in the drawing continuously moving film material 11 is drawn in the direction illustrated by the arrows by means of a film transport device which is not illustrated in detail but which includes in customary fashion, and in addition to the rollers 16, 12, 13 and 22, a film winding device which draws film via a film tensioner from a spool of film material. The film 11 is first led in a generally horizontal direction around an apertured roller 16 and pressurised air is supplied to the interior of the apertured roller 16 in order to form a defined air cushion between the surface of the roller and the film.

After the film 11 has passed around the roller 16 by somewhat more than 180°, so that it is now moving in approximately the opposite direction, it reaches a guide roller 12 and is guided around this roller into the vertical direction. After traversing a predetermined path the film is once more turned through an angle of approximately 90° around a further guide roller 13. After leaving the guide roller 13 the film passes to a further guide roller 22 which it leaves in an approximately vertical direction. The film is passed on for subsequent treatment or use and eventual winding by the winding roller (not shown) of the transport device.

An optical scanning device 23 is located generally above the apertured roller 16 and generates a series of scanning light beams 14 in a manner known per se by means of a laser and a mirror wheel, and also lenses and a strip-like concave mirror (not shown). The series of light beams 14 carry out a continuous and periodic scanning movement at right angles to the plane of the drawing, i.e. the beams 14 can be regarded as moving vertically downwardly through a vertically directed plane arranged at right angles to the plane of the drawing. A beam divider 21 is provided at the lower end of the scanning device 23 and is inclined at an angle of 45° to the vertical direction. The beam divider, which can be a half-silvered mirror, divides the series of light beams 14 into first and second sets of light beams 14a, 14b. The first set of light beams 14a are reflected at right angles, to the right, out of the series of light beams 14 and the second set of light beams 14b are directed vertically downwardly as an extension of the series of light beams 14, and impinge on the film at the line of incidence 20 at an angle $\alpha$ to the surface of the roller 16. Light specularly reflected from the line 20 at the angle of reflection $\alpha$ reaches the centre of a photoelectric detector 17 which can contain one or more light conducting rods and cylindrical lenses which extend parallel to the scanning direction, i.e. at right angles to the plane of the drawing.

Light remitted into the regions 24, 25 can, if required, be detected separately from the specularly reflected light and can be processed in the electronic processing circuit 18.

Shield means 26 arranged on both sides of the regions 24, 25 prevent stray light from reaching the photoelectric detector 17.

The first set of beams 14a which is reflected sideways out of the series of light beams 14 impinges at right angles on the film 11 at the line of incidence 19. It is important that the distances of the lines of incidence 19, 20 from the beam divider 21 are the same.

Directly behind the line of incidence 19 there is located a further photoelectric detector 15 which preferably operates only with a single light conducting rod and, if required, a cylindrical lens arranged in front of the light conductive rod. A photodetector is provided at at least one end face of each of the light conducting rods for converting the light which enters the associated light conducting rod into an electrical signal.

Shield means 27 are arranged between the film 11 and the photoelectric detector 15 and once more reduce the amount of stray light which can reach the photoelectric detector.

Whereas the photoelectric detector 17 responds to specularly reflected and remitted light the photoelectric detector 15 detects apertures in the film, or variations in the transparency of translucency thereof.

The particularly advantageous illumination of the two scanning lines (lines of incidence) 19 and 20 by one and the same scanning device is achieved by virtue of the fact that the film is guided through an angle of approximately 90° between the line 20, the roller 12 and the scanning line 19. The film 11 which extends between the scanning lines 19 and 20, and the first and second series of beams 14a, 14b thus together form an approximately quadrangular figure.

If desired, transmission on the one hand and remission and reflection on the other hand can be separately detected rather than by combining the two error signals in the electronic processing circuit 18. The precise layout of the electronic processing circuit 18 will depend on the nature of the faults which it is desired to detect. As a general rule faults in the film material will influence both the transmitted and the reflected light and the electronic processing circuit can conveniently include delay circuitry such as a store for storing the signal from the photoelectric detector 17 for a period equal to the movement of the film from the scanning line 20 to the scanning line 19. This signal, together with the signal from the photoelectric detector 15, can then be subsequently applied to the two inputs of an And-gate or other desired logic element.

It will be appreciated that the present invention is primarily concerned with the overall layout of the fault monitoring apparatus and not with the processing of the individual fault signals which will be readily understood by those skilled in the art.

**Claims**

1. Apparatus for monitoring for faults in translucent strip material (11) such as photographic film, the apparatus comprising a transport device (12, 13, 16, 22) for continuously moving the strip material (11) in its longitudinal direction; an optical scanning device (23) for projecting a first and second set of light beams (14a, 14b) at the strip (11) to effect line scanning thereof in a direction transverse to its direction of movement; and first and second photoelectric detectors (15, 17), each associated with a light conducting rod, for receiving light from said first and second sets of light beams respectively after impingement of the light from said first and second sets of light beams (14a, 14b) on the strip; wherein the strip (11) is forwarded in tensioned condition between two spaced apart rollers (12, 13); wherein the first set (14a) of light beams (14) impinges on the strip (11) substantially at right angles thereto in the region between said two rollers (12, 13); wherein the first photoelectric detector is arranged behind the strip (11) to receive light from said first set of light beams (14a); wherein the strip (11) is fed around a further roller (16) either before or after said two rollers (12, 13); wherein the second set of light beams (14b) is directed onto the strip at said further roller; and wherein the second photoelectric detector (17) is provided for light reflected from the strip at said further roller; the apparatus being characterised in that the further roller (16) has an air permeable peripheral wall through which air is blown from the inside to the outside of said further roller (16) to avoid the formation of air bubbles between the strip (11) and said further roller (16).

2. Apparatus in accordance with claim 1 and characterised in that the optical scanning device comprises a single light source and a beam divider (21) for transmitting the second set (14b) of light beams and for reflecting the first set (14a) of light beams; and in that the respective distances traversed by said second set (14b) of light beams and said first set (14a) of light beams from the beam divider (21) to the strip (11) are substantially equal.

3. Apparatus in accordance with claim 2 and characterised in that the two planes tangential to the strip (11) at the two respective lines of incidence (19, 20) of the first and second sets of light beams (14a, 14b) with the strip subtend an angle one with the other, such that one line of incidence (20) lies directly in the path of the second set of light beams (14b) transmitted by the beam divider (21) and the other line of incidence (19) lies directly in the path of the first set of light beams (14a) reflected by the beam divider (21).

4. Apparatus in accordance with any one of the preceding claims and wherein the at least one conducting rod of each said photoelectric detectors (15, 17) extends over the width of said strip (11).

5. Apparatus in accordance with any one of the preceding claims and including shield means (26, 27) for preventing stray light from each each of said photoelectric detectors (15, 17).

## Revendications

1. Appareil pour détecter des défauts dans un ruban de matière translucide (11) tel qu'un film photographique, l'appareil comprenant un dispositif de transport (12, 13, 16, 22) destiné à déplacer en continu le ruban de matière (11) dans sa direction longitudinale; un dispositif de balayage optique (23) destiné à projeter des premier et second groupes de faisceaux lumineux (14a, 14b) sur le ruban (11) afin d'en effectuer un balayage linéaire dans une direction transversale à la direction de son mouvement; et des premier et second détecteurs photoélectriques (15, 17) associés chacun à un barreau conducteur de lumiére, afin de recevoir de la lumière provenant desdits premier et second groupes de faisceaux lumineux, respectivement, après que la lumière desdits premier et second groupes de faisceaux lumineux (14a, 14b) a atteint le ruban; dans lequel le ruban (11) est avancé dans un état tendu entre deux rouleaux espacés (12, 13); dand lequel le premier groups (14a) de faisceaux lumineux (14) atteint le ruban (11) sensiblement perpendiculairement à celui-ci dans la zone comprise entre lesdits deux rouleaux (12, 13); dans lequel le premier détecteur photoélectrique est agencé en arrière du ruban (11) afin de recevoir de la lumière provenant dudit premier groupe de faisceaux lumineux (14a); dans lequel le ruban (11) est avancé autour d'un autre rouleau (16) disposé avant ou après lesdits deux rouleaux (12, 13); dans lequel le second groupe de faisceaux lumineux (14b) est dirigé sur le ruban passant sur ledit autre rouleau; et dans lequel le second détecteur photoélectrique (17) reçoit de la lumière réfléchie par le ruban à son passage sur ledit autre rouleau; l'appareil étant caractérisé en ce que l'autre rouleau (16) comporte une paroi périphérique perméable à l'air à travers laquelle de l'air est soufflé de l'intérieur vers l'extérieur dudit autre rouleau (16) pour éviter la formation de bulles d'air entre le ruban (11) et ledit autre rouleau (16).

2. Appareil selon la revendication 1, caractérisé en ce que le dispositif de balayage optique comprend une source unique le lumière et un diviseur optique (21) destiné à transmettre le second groupe (14b) de faisceaux lumineux et à réfléchir le premier groupe (14a) des faisceaux lumineux; et en ce que les distances respectives parcourues par ledit seconde groupe (14b) des faisceaux lumineux et ledit premier groupe (14a) de faisceaux lumineux du diviseur optique (21) au ruban (11) sont sensiblement égales.

3. Appareil selon la revendication 2, caractérisé en ce que les deux plans tangentiels au ruban (11) aux deux lignes respectives d'incidence (19, 20) des premier et second groupes de faisceaux lumineux (14a, 14b) sur le ruban forment entre eux un angle tel qu'une première ligne d'incidence (20) s'étend directement sur le trajet du second groupe de faisceaux lumineux (14b) transmis par le diviseur optique (21) et que l'autre ligne d'incidence (19) s'étend directement sur le trajet du premier groupe de faisceaux lumineux (14a) réfléchis par le diviseur optique (21).

4. Appareil selon l'une quelconque des revendications précédentes, dans lequel le ou les barreaux conducteurs de chacun desdits détecteurs photoélectriques (15, 17) s'étend sur la largeur dudit ruban (11).

5. Appareil selon l'une quelconque des revendications précédentes, comprenant des moyens de masquage (26, 27) empêchant une lumière parasite d'atteindre chacun desdits détecteurs photoélectriques (15, 17).

## Patentansprüche

1. Vorrichtung zum Überwachen von Fehlern in durchscheinendem Bandmaterial (11), wie photographischem Film, mit einer Transportvorrichtung (12, 13, 16, 22) zur kontinuierlichen Bewegung des Bandmaterials (11) in seiner Längsrichtung, einer optischen Abtastvorrichtung (23) zur Projektion eines ersten und zweiten Satzes von Lichtbündeln (14a, 14b) auf das Band (11), um dessen Linienabtastung in einer Richtung quer zu seiner Bewegungsrichtung zu bewirken, und ersten und zweiten photoelektrischen Detektoren (15, 17), von denen jeder einem Lichtleitstab zugeordnet ist, zur Aufnahme von Licht aus den ersten bzw. zweiten Sätzen von Lichtbündeln nach dem Auftreffen des Lichts aus den ersten und zweiten Sätzen von Lichtbündeln (14a, 14b) auf das Band, bei der das Band (11) in gespanntem Zustand zwischen zwei räumlich getrennten Walzen (12, 13) befördert wird, bei der der erste Satz (14a) von Lichtbündeln (14) auf das Band (11) im wesentlichen rechtwinklig dazu im Gebiet zwischen den zwei Walzen (12, 13) auftrifft, bei der der erste photoelektrische Detektor hinter dem Band (11) angeordnet ist, um Licht vom ersten Satz von Lichtbündeln (14a) zu empfangen, bei der das Band (11) entweder vor oder hinter den zwei Walzen (12, 13) um eine weitere Walze (16) geführt ist, bei der zweite Satz von Lichtbündeln (14b) auf das Band an der weiteren Walze gerichtet ist, un bei der der zweite photoelektrische Detektor (17) für Licht vorgesehen ist, das vom Streifen an der weiteren Walze reflektiert wird, dadurch gekennzeichnet, daß die weitere Walze (16) eine luftdurchlässige Umfanswand aufweist, durch die von der Innen-zur Außenseite der weiteren Walze (16) Luft geblasen wird, um die Bildung von Luftblasen zwischen dem Band (11) und der weiteren Walze (16) zu verhindern.

2. Vorrichtung nach Anspruch 1, dadurch gekennzeichnet, daß die optische Abtastvorrichtung eine einzelne Lichtquelle und einen Strahlteiler (21) aufweist, um den zweiten Satz (14b) von Lichtbündeln durchzulassen und dem ersten Satz (14a) von Lichtbündeln zu reflektieren, und daß die jeweiligen Abstände, die durch den zweiten Satz (14b) von Lichtbündeln und durch den ersten Satz (14a) von Lichtbündeln vom Strahlteiler (21) zum Band (11) überquert werden, im wesentlichen gleich sind.

3. Vorrichtung nach Anspruch 2, dadurch gekennzeichnet, daß die beiden an den beiden jeweiligen auf dem Band befindlichen Einfallslinien (19, 20) der ersten und zweiten Sätze von Lichtbündeln (14a, 14b) zum Band (11) tangentialen Ebenen einen derartigen Winkel miteinander bilden, daß eine Einfallslinie (20) direkt im Weg des zweiten Satzes von Lichtbündeln (14b) liegt, der vom Strahlteiler (21) durchgelassen wird, und die andere Einfallslinie (19) direkt im Weg des ersten Satzes von Lichtbündeln (14a), liegt, der vom Strahlteiler (21) reflektiert wird.

4. Vorrichtung nach einem der vorangegangenen Ansprüche, dadurch gekennzeichnet, daß sich wenigstens ein Leitstab von jedem der photoelektrischen Detektoren (15, 17) über die Breite des Bandes (11) erstreckt.

5. Vorrichtung nach einem der vorangehenden Ansprüche, dadurch gekennzeichnet, daß sie Abschirmmittel (26, 27) enthält, die verhindern, daß Streulicht die photoelektrischen Detektoren (15, 17) erreicht.